# EUROPEAN PATENT SPECIFICATION

(11) **EP 3 018 397 B1**
(45) Date of publication and mention of the grant of the patent: **25.12.2019**
(21) Application number: 14819573.8
(22) Date of filing: 01.07.2014
(51) Int. Cl.: F16L 57/00, F24D 3/12, B65D 81/113, F24F 13/30, F24F 1/00, F24H 4/00

(54) **COMBINATION OF AN ELBOW SHEATH AND AN ELBOW ASSEMBLY**
KOMBINATION AUS EINER WINKELUMMANTELUNG UND EINEM WINKELVERBUND
COMBINAISON D'UNE GAINE DE COUDE ET D'UN ASSEMBLAGE COUDE

(30) Priority: 03.07.2013 CN 201320393588 U
(43) Date of publication of application: 11.05.2016
(73) Proprietor: Gree Electric Appliances, Inc. of Zhuhai, Zhuhai, Guangdong 519015 (CN)
(72) Inventor: HUANG, Weichuan, Zhuhai Guangdong 519070 (CN)
(74) Representative: Inchingalo, Simona
(86) International application number: PCT/CN2014/081382
(87) International publication number: WO 2015/000400

(56) References cited:
- WO-A1-03/074387
- WO-A1-2012/081262
- CN-Y- 2 182 918
- CN-Y- 2 729 495
- FR-A1- 2 864 976
- JP-A- H1 047 585
- JP-A- 2004 245 398
- JP-A- 2013 096 467
- JP-A- 2013 096 467
- JP-U- S54 159 456
- KR-A- 20070 069 116

## Description

### TECHNICAL FIELD

The present disclosure relates to the field of pipeline fixation in an air conditioner, more particularly, to an elbow sheath, and an air conditioner and a heat pump water heater having the same.

### BACKGROUND

Currently, in the field of the air conditioner, among four key assemblies of the air conditioner, two heat exchange assemblies (the evaporator assembly of the indoor unit and the condenser assembly of the outdoor unit) are commonly assembled with aluminum foil fin parts for heat exchange and U-shaped pipeline parts by means of expanding pipes and welding. Because of its good tensile, bending and welding properties, TPZM soft red copper is the preferred material for producing the U-shaped pipeline parts of the two assemblies. A U-shaped pipeline part is molded by processing and connecting two long red copper pipes and a small red copper elbow through corresponding technologies. The heat exchange system is constructed after the indoor unit and the outdoor unit are connected together. The connection of the U-shaped pipeline parts should be hermetic so as to form a circulation pipeline. The parts made of red copper have low impact resistance strength against external forces, especially, hollow red copper pipeline parts are apt to collapse under forces, which brings difficulties for the structural design, and corresponding protection designs should be considered to prevent the copper pipeline parts or the small elbow parts from collapsing and rupturing during production and transportation, so as to avoid quality accidents such as the leakage, blockage or breakdown of the system.

In the two heat exchange assemblies made of copper pipes, as heat is exchanged to cold air or heat air, portions of copper pipes are exposed out of the fins. If the copper pipes or small elbows in the two heat exchange assemblies of the air conditioner are deformed, and collapse severely, the leakage or blockage of the system will happen, finally the breakdown of the system will be caused and the air conditioner cannot run normally. In the transit of air conditioners for sales, in order to prevent the pipeline parts of the two heat exchange assemblies from collapsing and rupturing under the impact of external forces, after the two heat exchange assemblies are installed and fixed in an outer shell, the traditional protection manner against collision is to provide elastic rubber products (namely, rubber blocks) at key positions where the copper pipe parts or elbow parts are apt to collapse, so as to buffer the forces and prevent the copper pipes and small elbow parts from collapsing and being deformed in the transit of the whole air conditioner, and to protect the circulation system against any leakage or blockage. But in the actual transit of air conditioners for sales, severe collapses, deformations, cracks and leakages are still found in the copper pipe parts and the small elbow parts of the outdoor unit and the indoor unit of the air conditioner, which bring severe product quality problems. The rubber blocks can only moderate the collision between the copper pipes parts, but cannot eliminate the collapses of the copper pipe parts and the small elbow parts. Moreover, during the long period of use, the rubber blocks of the indoor unit of the split wall-mounted air conditioner are immersed for a long time in the condensate water generated during the heat exchange, and the rubber blocks are apt to age, deteriorate and give off acrid and bad smells, which brings big hidden troubles to the quality of the products and to the environment. An example of a known elbow cover is shown in document JP2013096467. Document JP S54 159456 U discloses the preamble of claim 1.

### SUMMARY OF THE INVENTION

One objective of the present disclosure is to provide an elbow sheath, so as to solve the technical problem that the elbow sheath has poor protection effect on the elbow assembly, and help to solve the technical problem that the elbow assembly is apt to collapse and be deformed.

In order to realize the objective above, in one aspect, the present disclosure provides an elbow sheath, wherein, a first end of the elbow sheath has a receiving portion configured to receive an elbow assembly; a second end of the elbow sheath is opposite to the first end and has an inwardly recessed portion; and the inwardly recessed portion is provided with a through hole.

Further, the bottom-most end of the inwardly recessed portion and the bend apex of the elbow assembly are located in the axis of the elbow sheath.

Further, the axis of the through hole coincides with the axis of the elbow sheath.

Further, the area of a cross-section of the through hole, which is vertical to the axis of the through hole, is ranged from 20% to 50% of the area of an end face of the second end of the elbow sheath.

Further, the first end of the elbow sheath is provided with placement portions configured to accommodate flaring openings of the elbow assembly.

Further, a snap-fitting joint is provided inside the receiving portion and configured to fix the elbow assembly.

Further, the receiving portion and the elbow assembly are joined through an interference fit.

Further, the elbow sheath is made of elastic material.

The present disclosure further provides an air conditioner including the elbow sheath above.

The present disclosure further provides a heat pump water heater including the elbow sheath above.

According to the technical schemes of the present disclosure, the first end of the elbow sheath has a receiving portion for receiving the elbow assembly; the second end, which is opposite to the first end of the elbow sheath, has an inwardly recessed portion. As the second end of the elbow sheath is inwardly recessed, two corner portions of the elbow sheath outwardly protrude accordingly, which enables external forces to be transferred to the two corner portions of the elbow sheath, thereby reducing the forces on the weakest top of the elbow assembly. What's more, the inwardly recessed portion is provided with a through hole, which enables the weakest top of the elbow assembly to be free from forces. When external forces act on the elbow sheath, the external forces are transferred to the two corner portions of the elbow sheath. As the corner portions of the elbow sheath outwardly protrude, the thickness of the elbow sheath is correspondingly increased, which provides an effective buffering effect against external forces. Consequently, the air conditioner and the heat pump water heater, which are provided with the elbow sheath of the present disclosure respectively, can realize enhanced protections for the elbow assembly, and help to solve the technical problem that the copper pipe parts and the small elbow parts are apt to collapse and be deformed.

### BRIEF DESCRIPTION OF THE DRAWINGS

As one part of the present disclosure, the drawings are provided for the further comprehension of the present invention, and what described below are several embodiments of the present invention, and the description thereof are intended to explain the present disclosure, but not intended to limit the scope of the present invention. The drawings are as follows:
Fig. 1 is a front view of the elbow sheath according to one embodiment of the present invention;
Fig. 2 is a bottom view of the elbow sheath according to one embodiment of the present invention; and
Fig. 3 is a section view of Fig. 2 taken along the line A-A.

### DETAILED DESCRIPTION OF THE PREFERRED EMBODIMENTS

It should be noted that various embodiments and the features thereof can be combined with each other under the condition of no conflict. The present disclosure will be described in more details with reference to the accompanying figures and embodiments.

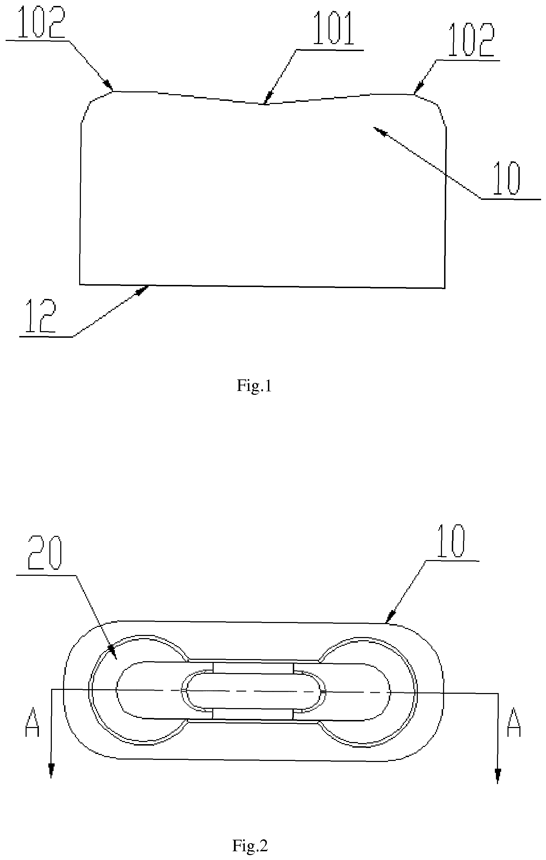

As shown in Figs. 1-3, the elbow sheath of the present disclosure has a first end 12 with a receiving portion 20 for receiving the elbow assembly; and a second end 10, which is opposite to the first end 12 of the elbow sheath and has an inwardly recessed portion 101. The inwardly recessed portion 101 is provided with a through hole 13. As the second end 10 of the elbow sheath is inwardly recessed, the corner portions 102 of the elbow sheath at two sides outwardly protrude accordingly.

As the second end of the elbow sheath is inwardly recessed and the corner portions of the elbow sheath at two sides outwardly protrude, external forces on the elbow sheath are transferred to the two corner portions of the elbow sheath, thereby reducing the forces on the weakest top of the elbow assembly. What's more, the inwardly recessed portion is provided with a through hole, which enables the weakest top of the elbow assembly to be free from forces. When the elbow sheath is under external forces, the external forces are transferred to the two corner portions of the elbow sheath. As the two corner portions of the elbow sheath outwardly protrude, the thickness of the elbow sheath is increased correspondingly, which provides an effective buffering effect against external forces.

Preferably, the bottom-most end of the inwardly recessed portion 101 and the bend apex of the elbow assembly are located in the axis of the elbow sheath. In this way, after the elbow sheath and the elbow assembly are assembled, the weakest top of the elbow assembly is protected effectively. When external force acts on the top of the elbow assembly, the external force is most transferred to the corner portions 102 of the elbow sheath, all or almost all of the external force acts on the corner portions 102 of the elbow sheath while little external force acts on the bend apex of the elbow assembly. Preferably, the axis of the through hole 13 coincides with the axis of the elbow sheath, which optimizes the effect of the force transfer.

According to the research and experiments done by the inventors, when the area of the cross-section of the through hole 13, which is vertical to the axis of the through hole, is ranged from 20% to 50% of the area of the end face of the second end of the elbow sheath, the effect of the force transfer is more remarkable.

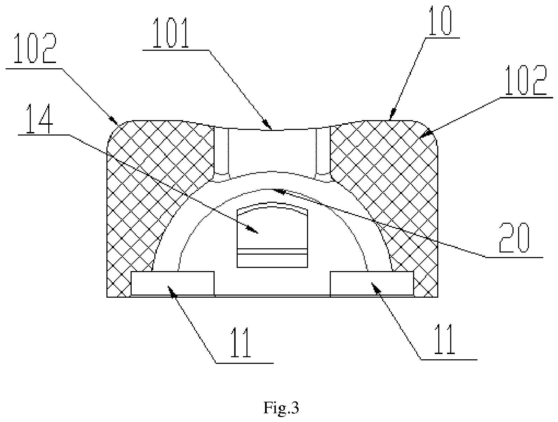

As shown in Fig.3, according to one embodiment of the present invention, the first end 12 of the elbow sheath is provided with placement portions configured to accommodate flaring openings of the elbow assembly. The elbow assembly commonly includes a bent pipe and two straight pipes. During the processing of the elbow assembly, for the convenience of connecting the bent pipe with the straight pipes, the common pipe orifice located at the junction of the bent pipe and the straight pipe is processed to be flaring-shaped. The placement portions are configured to accommodate the flaring openings of the elbow assembly, so that the elbow assembly having flaring openings can better fit the elbow sheath.

As shown in Fig.3, according to one embodiment of the present invention, a snap-fitting joint 14 is provided inside the receiving portion 20 for fixing the elbow assembly. With the snap-fitting joint 14 provided, after the elbow assembly and the elbow sheath are assembled together, the elbow sheath is fixed tightly with the elbow assembly, and it is not easy to fall from the elbow assembly.

According to one embodiment of the present invention, the receiving portion 20 and the elbow assembly are joined through an interference fit, in this case, the snap-fitting joint 14 can either be provided or not provided, because the receiving portion has been fixed with the elbow assembly reliably with the interference fit connection.

Preferably, the elbow sheath of the present disclosure is made of elastic material, which reduces deformation of the elbow assembly when external forces act on the elbow assembly.

The present disclosure further provides an air conditioner provided with the elbow sheath described above.

The present disclosure further provides a heat pump water heater provided with the elbow sheath described above.

As known from the description above, the first end of the elbow sheath has the receiving portion for receiving the elbow assembly; the second end, which is opposite to the first end of the elbow sheath, has the inwardly recessed portion. As the second end of the elbow sheath is inwardly recessed, two corner portions of the elbow sheath outwardly protrude accordingly, which enables external forces to be transferred to the two corner portions of the elbow sheath, thereby reducing the forces on the weakest top of the elbow assembly. What's more, the inwardly recessed portion is provided with a through hole, which enables the weakest top of the elbow assembly to be free from forces. When external forces act on the elbow sheath, the external forces are transferred to the two corner portions of the elbow sheath. As the two corner portions of the elbow sheath outwardly protrude, the thickness of the elbow sheath is increased correspondingly, which provides an effective buffering effect against external forces. Consequently, the air conditioner and the heat pump water heater, which are provided with the elbow sheath of the present disclosure respectively, can realize enhanced protections for the elbow assembly, and help to solve the technical problem that the copper pipe parts and the small elbow parts are apt to collapse and be deformed.

What described above are several embodiments of the present invention, they are not intended to limit the scope of the present invention. It will be understood by those skilled in the prior art that the present invention may have various modifications and variations. Any modification, replacement and improvement made without departing from the spirit and principle of the present invention should be contained in the scope of the present invention.

## Claims

1. A combination of an elbow sheath and an elbow assembly, wherein a first end (12) of the elbow sheath has a receiving portion (20) configured to receive an elbow assembly;
a second end (10) of the elbow sheath is opposite to the first end (12); wherein a snap-fitting joint (14) is provided inside the receiving portion (20) and configured to fix the elbow assembly;
**characterized in that**
the second end (10) has an inwardly recessed portion (101); and the inwardly recessed portion (101) is provided with a through hole.

2. The combination of the elbow sheath and the elbow assembly according to claim 1, wherein, a bottom-most end of the inwardly recessed portion (101) and a bend apex of the elbow assembly are located in an axis of the elbow sheath.

3. The combination of the elbow sheath and the elbow assembly according to claim 1, wherein, an axis of the through hole (13) coincides with an axis of the elbow sheath.

4. The combination of the elbow sheath and the elbow assembly according to claim 1, wherein, an area of a cross-section of the through hole (13) is ranged from 20% to 50% of an area of an end face of the second end of the elbow sheath, said cross-section is vertical to an axis of the through hole.

5. The combination of the elbow sheath and the elbow assembly according to claim 1, wherein, the first end (12) of the elbow sheath is provided with placement portions (11) configured to accommodate flaring openings of the elbow assembly.

6. The combination of the elbow sheath and the elbow assembly according to claim 1, wherein, the receiving portion (20) and the elbow assembly are joined through an interference fit.

7. The combination of the elbow sheath and the elbow assembly according to claim 1, wherein, the elbow sheath is made of elastic material.

8. An air conditioner, comprising a combination of an elbow sheath and an elbow assembly, wherein, the combination of the elbow sheath and the elbow assembly is as set forth in any one of claims 1-7.

9. A heat pump water heater, comprising a combination of an elbow sheath and an elbow assembly, wherein, the combination of the elbow sheath and the elbow assembly is as set forth in any one of claims 1-7.

## Patentansprüche

1. Kombination aus einer Winkelummantelung und einem Winkelverbund, wobei
ein erstes Ende (12) der Winkelummantelung einen Aufnahmeabschnitt (20), der zur Aufnahme eines Winkelverbunds konfiguriert ist;
ein zweites Ende (10) der Winkelummantelung dem ersten Ende (12) gegenständig liegt, wobei
eine Schnappverbindung (14) innerhalb des Aufnahmeabschnitts (20) vorgesehen und konfiguriert ist, um den Winkelverbund zu fixieren;
**dadurch gekennzeichnet, dass**
das zweite Ende (10) einen nach innen ausgesparten Abschnitt (101) aufweist; und der nach innen ausgesparte Abschnitt (101) mit einem Durchgangsloch versehen ist.

2. Kombination aus der Winkelummantelung und dem Winkelverbund nach Anspruch 1, wobei ein unterstes Ende des nach innen ausgesparten Abschnitts (101) und eine Biegungsspitze des Winkelverbunds in einer Achse der Winkelummantelung angeordnet sind.

3. Kombination aus der Winkelummantelung und dem Winkelverbund nach Anspruch 1, wobei eine Achse des Durchgangslochs (13) mit einer Achse der Winkelummantelung zusammenfällt.

4. Kombination aus der Winkelummantelung und dem Winkelverbund nach Anspruch 1, wobei ein Bereich eines Querschnitts des Durchgangslochs (13) im Bereich von 20% bis 50% eines Bereichs einer Endfläche des zweiten Endes der Winkelummantelung liegt, der Querschnitt ist senkrecht zu einer Achse des Durchgangslochs.

5. Kombination aus der Winkelummantelung und dem Winkelverbund nach Anspruch 1, wobei das erste Ende (12) der Winkelummantelung mit Platzierungsabschnitten (11) versehen ist, die zur Aufnahme von Aufweitungsöffnungen des Winkelverbunds konfiguriert sind.

6. Kombination aus der Winkelummantelung und dem Winkelverbund nach Anspruch 1, wobei der Aufnahmeabschnitt (20) und der Winkelverbund durch eine Presspassung miteinander verbunden sind.

7. Kombination aus der Winkelummantelung und dem Winkelverbund nach Anspruch 1, wobei die Winkelummantelung aus einem elastischen Material hergestellt ist.

8. Klimaanlage umfassend eine Kombination aus einer Winkelummantelung und einem Winkelverbund, wobei die Kombination der Winkelummantelung und des Winkelverbunds wie nach einem der Ansprüche 1-7 ist.

9. Pumpen-Warmwasserbereiter umfassend eine Kombination aus einer Winkelummantelung und einem Winkelverbund, wobei die Kombination der Winkelummantelung und des Winkelverbunds wie nach einem der Ansprüche 1-7 ist.

## Revendications

1. Combinaison d'une gaine de coude et d'un assemblage coude, dans laquelle
une première extrémité (12) de la gaine de coude comporte une partie de réception (20) configurée pour recevoir un assemblage coude ;
une seconde extrémité (10) de la gaine de coude est opposée à la première extrémité (12) ; dans laquelle
un joint par encliquetage (14) est prévu à l'intérieur de la partie de réception (20) et configuré pour fixer l'assemblage coude ;
**caractérisée en ce que**
la seconde extrémité (10) comporte une partie de renfoncement (101) vers l'intérieur ; et la partie de renfoncement (101) vers l'intérieur est pourvue d'un trou débouchant.

2. Combinaison de la gaine de coude et de l'assemblage coude selon la revendication 1, dans laquelle une extrémité inférieure de la partie de renfoncement (101) vers l'intérieur et un sommet de coudage de l'assemblage coude sont situés dans un axe de la gaine de coude.

3. Combinaison de la gaine de coude et de l'assemblage coude selon la revendication 1, dans laquelle un axe du trou débouchant (13) coïncide avec un axe de la gaine de coude.

4. Combinaison de la gaine de coude et de l'assemblage coude selon la revendication 1, dans laquelle une zone d'une section transversale du trou débouchant (13) correspond de 20 à 50 % d'une zone d'une face d'extrémité de la seconde extrémité de la gaine de coude, ladite section transversale est verticale à un axe du trou débouchant.

5. Combinaison de la gaine de coude et de l'assemblage coude selon la revendication 1, dans laquelle la première extrémité (12) de la gaine de coude est pourvue de parties de placement (11) configurées pour loger des ouvertures évasées de l'assemblage coude.

6. Combinaison de la gaine de coude et de l'assemblage coude selon la revendication 1, dans laquelle la partie de réception (20) et l'assemblage coude sont joints par l'intermédiaire d'un ajustement par serrage.

7. Combinaison de la gaine de coude et de l'assemblage coude selon la revendication 1, dans laquelle la gaine de coude est constituée d'un matériau élastique.

8. Climatiseur, comprenant une combinaison d'une gaine de coude et d'un assemblage coude, dans lequel la combinaison de la gaine de coude et de l'assemblage coude est selon l'une quelconque des revendications de 1 à 7.

9. Chauffe-eau à pompe à chaleur comprenant une combinaison d'une gaine de coude et d'un assemblage coude, dans lequel la combinaison de la gaine de coude et de l'assemblage coude est selon l'une quelconque des revendications de 1 à 7.
